# EUROPÄISCHE PATENTSCHRIFT

(11) **EP 3 138 666 B1**
(45) Veröffentlichungstag und Bekanntmachung des Hinweises auf die Patenterteilung: **03.07.2019**
(21) Anmeldenummer: 16002046.7
(22) Anmeldetag: 25.02.2011
(51) Int. Cl.: B25J 9/16, G06F 9/44

(54) **PROZESSMODULBIBLIOTHEK UND PROGRAMMIERUMGEBUNG ZUR PROGRAMMIERUNG EINES MANIPULATORPROZESSES**
PROCESS MODULE LIBRARY AND PROGRAMMING ENVIRONMENT FOR PROGRAMMING A MANIPULATOR PROCESS
BIBLIOTHÈQUE DE MODULE DE PROCESSUS ET ENVIRONNEMENT DE PROGRAMMATION DESTINÉ À PROGRAMMER UN PROCESSUS DE MANIPULATEUR

(30) Priorität: 26.02.2010 DE 102010009474; 24.03.2010 DE 102010012598
(43) Veröffentlichungstag der Anmeldung: 08.03.2017
(62) Teilanmeldung aus: 11707795.8
(73) Patentinhaber: KUKA Deutschland GmbH, 86165 Augsburg (DE)
(72) Erfinder: Schmirgel, Volker, 86199 Augsburg (DE); Hietmann, Gerhard, 86405 Herbertshofen (DE); Reitelshöfer, Sebastian, 90403 Nürnberg (DE); Klumpp, Simon, 73765 Neuhausen (DE); Kurth, Johannes, 86163 Augsburg (DE)
(74) Vertreter: Schlotter, Alexander Carolus Paul

(56) Entgegenhaltungen:
- WO-A1-2006/043873
- WO-A1-2008/119383
- WO-A2-2007/099511
- US-B1- 6 292 715
- James Daniel Morrow: "Sensorimotor Primitives forProgramming Robotic Assembly Skills", Thesis for the degree of Doctor in Philosophy in Robotics , Mai 1997 (1997-05), Seiten 1-186, XP002638936, The Robotics Institute Carnegie Mellon University Pittsburgh, Pennsylvania DOI: 10.1.1.54.8862 Gefunden im Internet: URL:http://www.ri.cmu.edu/pub_files/pub1/m orrow_james_1997_2/morrow_james_1997_2.pdf [gefunden am 2011-05-25]
- Matthew Wayne Gertz: "A visual programming environment for real-time control systems", , 22. November 1994 (1994-11-22), XP055138147, Gefunden im Internet: URL:http://pqdt.calis.edu.cn/detail.aspx?i d=aMvmRGUp0S4%3d [gefunden am 2014-09-12]

## Beschreibung

Die vorliegende Erfindung betrifft eine Prozessmodulbibliothek und eine graphische Programmierumgebung zur Programmierung eines Manipulatorprozesses, insbesondere eines mittels wenigstens eines Manipulators ausgeführten Montageprozesses, ein Verfahren zur Programmierung eines Manipulatorprozesses mittels einer solchen Prozessmodulbibliothek und/oder graphischen Programmierumgebung, und ein Verfahren zur Erstellung einer solchen Prozessmodulbibliothek.

Herkömmliche, steif positionsgeregelte Industrieroboter können durch Verknüpfen einfacher Basisbefehle eines überschaubaren Basisbefehlssatzes wie "LIN", "CIRC" und "PTP" zur Vorgabe einer linearen, kreissegmentförmigen bzw. achsgeführten Bewegung zwischen geteachten Posen programmiert werden, die der steif positionsgeregelte Industrieroboter dann präzise ausführt.

Manipulatoren und deren Steuerungen werden jedoch zunehmend komplexer, so dass ihr Potential, insbesondere für nicht spezialisierte Bediener, nicht oder nur unter großen Zeitaufwand und mit entsprechender Fehleranfälligkeit ausgeschöpft werden kann.

So ermöglichen beispielsweise nachgiebigkeitsgeregelte Leichtbauroboter einen effizienteren und schonenderen Kontakt eines manipulatorgeführten Werkzeuges bzw. - stückes mit der Umgebung. Doch erfordert die Programmierung einer entsprechenden Regelung, insbesondere bei strukturvariierenden Zustandsübergängen, mit der Vorgabe vielfältiger Kraft- und Abbruchbedingungen, Regelparameter und Signalverarbeitungen in der Praxis noch einen zu hohen Zeit- und Qualifikationsaufwand und ist so insbesondere zur Automatisierung der Montage kleinerer Losgrößen nicht effektiv.

Andererseits werden selbst einfache industrielle Manipulatorprozesse, etwa das Anfahren einer Greifpose auf einer geraden Bahn, das anschießende Schließen des Greifers, das Verfahren in eine Montagepose mit anschießendem Öffnen des Greifers und Zurückfahren in eine Ausgangspose, heute umständlich sequentiell programmiert, indem in einer Hochsprache, beispielsweise der "Kuka Robot Language" ("KRL") die einzelnen Basisbefehle programmiert, anschließend die dabei zugrundegelegten Posen geteacht und nachfolgend das Programm getestet wird. Soll das Programm, etwa durch Ändern oder Ergänzen von Basisbefehlen und/oder Posen, korrigiert oder verändert werden, muss dieser Prozess mehrfach iterativ durchlaufen werden, was zusammen mit dem erforderlichen Expertenwissen zur Beherrschung der Programmier-Hochsprache insbesondere einem industriellen Einsatz von Robotern in klein- und mittelständischen Unternehmen entgegensteht.

Aus der WO 2007/099511 A2 ist ein programmierbares Robotersystem mit einem Roboter, einem Steuersystem zum Steuern von Antrieben des Roboters, einem Benutzerschnittstellenmittel mit einem Mittel zum Programmieren des Robotersystems und einem mit dem Benutzerschnittstellenmittel und Steuersystem zusammenwirkenden Speichermittel zum Speichern von Informationen betreffend die Bewegung und weitere Operationen des Roboters und optional Informationen betreffend die Umgebung bekannt.

Aufgabe der vorliegenden Erfindung ist es, die Programmierung eines, insbesondere industriellen, Manipulatorprozesses zu verbessern.

Diese Aufgabe wird durch eine Prozessmodulbibliothek mit den Merkmalen des Anspruchs 1 gelöst. Ansprüche 6 bzw. 16 stellt ein Verfahren zur Programmierung eines Manipulatorprozesses mittels einer erfindungsgemäßen Prozessmodulbibliothek, Anspruch 8 ein Verfahren zur Erstellung einer erfindungsgemäßen Prozessmodulbibliothek und Anspruch 17 ein Computerprogrammprodukt, insbesondere einen Datenträger bzw. ein Speichermedium, zur Speicherung einer erfindungsgemäßen Prozessmodulbibliothek und/oder zur Durchführung eines erfindungsgemäßen Verfahrens unter Schutz. Die Unteransprüche betreffen vorteilhafte Weiterbildungen.

Gemäß einem Prozessmodulbibliotheksaspekt der vorliegenden Erfindung werden in einer bevorzugten Ausführung für verschiedene Manipulatorprozesse, insbesondere für verschiedene Montageprozesse wie dem Fügen unterschiedlicher Bauteile, für Fertigungs- und/oder für Handhabungs-, insbesondere Transportprozesse, die mittels eines oder mehrerer Manipulatoren, insbesondere Robotern mit vorzugsweise wenigstens sechs Bewegungsachsen, bevorzugt Leichtbaurobotern wie dem LBR der Anmelderin, durchgeführt werden, zunächst Teilprozesse identifiziert, die den verschiedenen Manipulatorprozessen gemeinsam sind. Zusätzlich zu einem oder mehreren Manipulatoren können die Manipulatorprozesse auch Zusatzachsen bzw. Transport-, Spann- und ähnliche Vorrichtungen wie Dreh- und/oder Kipptische und dergleichen umfassen, die ebenfalls erfindungsgemäß programmiert werden können.

So kann, insbesondere bei entsprechenden Lage- und/oder Fertigungstoleranzen, beispielsweise das Fügen von Welle-Nabe-Verbindungen, das Fügen von Zahnrädern und das Einschrauben in Gewinde, jeweils das automatisierte Suchen einer entsprechenden Startpose erfordern. Indem erfindungsgemäß ein Prozessmodul zur Durchführung des Teilprozesses "(Start)Posensuche" zur Verfügung gestellt wird, welches durch entsprechende Parametrierung an die jeweilige Anforderungen des Montageprozesses angepasst und mit weiteren Prozessmodulen, etwa zum Schrauben und zum Prüfen des Prozesserfolgs wie beispielsweise der erzielten Vorspannung, verknüpft werden kann, kann auch ein nicht spezialisierter Anwender rasch und zuverlässig komplexere manipulatorgestützte Montageprozesse programmieren bzw. erstellen und dabei das Potential neuer Manipulatoren wie beispielsweise Leichtbaurobotern und/oder neuer Steuerungen wie beispielsweise einer Nachgiebigkeits- oder Kraftregelung, ausnutzen, um den Prozess zu optimieren.

Zum Erstellen solcher Prozessmodule wird gemäß einer Ausführung der vorliegenden Erfindung ein gemeinsamer Basisbefehlssatz von Basisbefehlen identifiziert und erstellt. Dazu werden die Teilprozesse vorzugsweise in atomare oder molekulare Basisoperationen zerlegt, wobei eine atomare Basisoperation im Sinne der vorliegenden Erfindung insbesondere eine nicht mehr weiter zerlegbare Operation wenigstes eines Manipulators, etwa das Umschalten zwischen verschiedenen Regelungen, eine einfache geometrische Bewegung wie das Anfahren einer zweiten Pose aus einer ersten Pose auf einer Geraden oder Kreisbahn im kartesischen oder Gelenkkoordinatenraum oder das Öffnen eines Greifers bezeichnet, eine molekulare Basisoperation entsprechend eine Operation, die zwar gedanklich in noch kleinere, atomare Einzeloperationen zerlegbar ist, jedoch in den Teilprozessen stets nur als ganzes ausgeführt wird, etwa das Abfahren einer durch Hilfs- bzw. Zwischenposen kollisionsfrei vorgegebenen Bahn. Zur Erstellung des Basisbefehlssatzes kann vorteilhaft auf bereits vorhandene Basisbefehle, beispielsweise einer herkömmlichem Programmiersprache zurückgegriffen werden.

Die durch Verknüpfung solcher Basisbefehle erstellten Prozessmodule werden in parametrisierte Form in einer Prozessmodulbibliothek bereitgestellt. Der Anwender kann durch Vorgabe der Parameter der Prozessmodule und ihre Verknüpfung mit weiteren Prozessmodulen oder Basisbefehlen dann den Manipulatorprozess rasch, einfach und fehlerfrei programmieren. Ein für nicht spezialisierte Anwender schwer beherrschbares, komplexes Programmieren kann insofern im Wesentlichen durch ein Parametrieren ersetzt werden.

Als parametrierbares Prozessmodul wird vorliegend insbesondere ein Programmmodul bezeichnet, für das der Anwender, etwa durch Aufruf mit entsprechenden Übergabewerten, durch Nutzung eines gemeinsamen Daten- bzw. Speicherbereichs, und/oder durch Bestehenlassen bzw. Nichtverändern von Defaultwerten, die beispielsweise vorab vom Anwender oder bereits vom Hersteller vorgegeben sind, einen oder mehrere Parameter vorgeben kann.

Ein, vorzugsweise für verschiedene Manipulatorprozesse gemeinsamer, Teilprozess im Sinne der vorliegenden Erfindung kann auch ein kompletter Manipulatorprozess sein.

Die Verknüpfung von Basisbefehlen miteinander zu einem Prozessmodul, von einem Prozessmodul mit einem weiteren Prozessmodul und von einem Prozessmodul mit einem Basisbefehl erfolgt programmtechnisch vorzugsweise durch mathematische Operationen bzw. Operatoren wie Transformationen von Programmwerten, die beispielsweise Manipulatorposen definieren, insbesondere durch logische Operationen bzw. Operatoren wie Implikationen ("Wenn-dann"), hieraus gebildeten Programmanweisungen wie Schleifen, und dergleichen. Bei einer graphischen Porgrammierumgebung kann die Verknüpfung insbesondere graphisch, etwa durch Verbinden, Übereinanderlegen oder Neben- bzw. Untereinander-Anordnen von Prozessmodulen bzw. Basisbefehlen erfolgen.

Gemäß einer bevorzugten Ausführung der vorliegenden Erfindung definiert wenigstens ein Parameter eines Prozessmoduls einen Typus des durch dieses Prozessmodul durchgeführten Teilprozesses. So kann beispielsweise eine Posensuche einerseits durch Aufsuchen einer Aussparung mit einem manipulatorgeführten Vorsprung, zum Beispiel durch "Ertasten" einer Bohrung mit einem Stift, und andererseits durch Aufsuchen eines Vorsprungs mit einer manipulatorgeführten Aussparung, sowie beispielsweise auf einer geraden Bahn, Zickzackbahn, Spiralbahn, sinusförmigen oder Lissajousbahn erfolgen. Durch Vorgabe eines Parameters, der definiert, ob mit einem manipulatorgeführten Vorsprung oder einer manipulatorgeführten Aussparung gesucht wird, und eines weiteren Parameters, der die Art der Suchbahn definiert, können somit die Typen "Suchen mit einem manipulatorgeführten Vorsprung auf einer geraden Bahn", "Suchen mit einem manipulatorgeführten Vorsprung auf einer Zickzackbahn", "Suchen mit einer manipulatorgeführten Aussparung auf einer geraden Bahn" etc. mit demselben Prozessmodul "Posensuche" programmiert werden.

Zusätzlich oder alternativ kann wenigstens ein Parameter eines Prozessmoduls eine Kinematik eines Manipulators definieren. Beispielsweise können dieselben Werkzeugbahnen von Manipulatoren mit unterschiedlichen Geometrien, beispielsweise Achsabständen, und/oder unterschiedlichen Strukturen, beispielsweise Knickarm-, SCARA-, Portal- oder redundanten Manipulatoren durchgeführt werden. Indem für solche unterschiedliche Kinematiken dasselbe Prozessmodul zur Verfügung gestellt und durch Vorgabe eines oder mehrerer Parameter, beispielsweise einer Kennung für die Struktur und/oder Werte für die unterschiedlichen Geometriegrößen wie zum Beispiel Achsabstände, vom Anwender parametriert wird, kann dieser ohne nähere Kenntnis und Berücksichtigung der Manipulatorkinematik einen Manipulatorprozess programmieren.

Vorzugsweise umfasst ein Teilprozess eine Posensuche, um beispielsweise trotz toleranzbedingtem Versatz von Fügepartnern in aufeinanderfolgenden Prozesswiderholungen jeweils geeignete Startposen zum Fügen anzufahren.

Hierzu kann ein Manipulator ein Werkzeug oder Werkstück auf einer Oberfläche längs einer vorgegeben Bahn verfahren, wobei er vorzugsweise eine Kraftkomponente senkrecht zur Oberfläche aufprägt. Dadurch wird ein manipulatorgeführter Vorsprung beim Überfahren einer gesuchten Aussparung in diese bzw. eine manipulatorgeführte Aussparung beim Überfahren eines gesuchten Vorsprung auf diesen gezwungen und wirkt so einer Weiterbewegung formschlüssig entgegen. Dies kann beispielsweise durch einen entsprechenden Kraftanstieg oder ein Verharren in der gefundenen Pose trotz kommandierter Weiterbewegung erfasst werden.

Vorzugsweise wird der Manipulator bei der Suche dazu in einer Richtung senkrecht und/oder in wenigstens einer Richtung parallel zur abgesuchten Oberfläche nachgiebig, positions- oder kraftgeregelt.

Eine Nachgiebigkeitsregelung senkrecht zur abgesuchten Oberfläche kann deren Beschädigung verhindern. Eine Positionsregelung parallel zur abgesuchten Oberfläche ermöglicht das Abfahren wohldefinierter Suchbahnen, beispielsweise einer Geraden, während eine Kraftregelung, zum Beispiel die Aufprägung einer wechselnden Kraft senkrecht zu einer positionsgeregelten Geraden, auch das Absuchen unbekannter Oberflächengeometrien ermöglicht. Vorzugsweise wird der Manipulator in Suchrichtung nachgiebig geregelt, um das Werkstück beim Auffinden der Aussparung/des Vorsprungs mit dem Vorsprung/der Aussparung nicht zu beschädigen. In einer Richtung senkrecht hierzu und parallel zur abzusuchenden Oberfläche kann der Manipulator positions- oder kraftgeregelt werden, um eine wohldefinierte oder eine werkstückangepasste Suchbahn zu realisieren.

Eine bevorzugte vorgegebene Suchbahn kann beispielsweise gerade oder wechselweise von einer Geraden positions- oder kraftgeregelt abweichend, insbesondere zickzack-, sinus- oder mäanderförmig, als Kreisbahnen mit konstantem oder variierendem Radius, längs einer Lissajousfigur oder stochastisch auf der abzusuchenden Oberfläche verlaufen.

Vorzugsweise wird ein Vorsprung, mit dem eine Aussparung gesucht wird, bzw. eine Aussparung, mit der ein Vorsprung gesucht wird, bei der Suche gegen eine Fügerichtung zwischen Vorsprung und Aussparung, beispielsweise eine Symmetrieachse eines rotationssymmetrischen Stiftes und einer passenden Bohrung, um einen vorgegebenen Winkel geneigt, der vorzugsweise zwischen 10° und 80° beträgt, um gleichermaßen ein sicheres Eintauchen des Vorsprungs in die Aussparung sicherzustellen und eine Beschädigung zu verhindern.

Gemäß einer bevorzugten Ausführung der vorliegenden Erfindung umfasst ein Teilprozess ein Fügen durch Schließen einer formschlüssigen Fügeverbindung, beispielsweise das Einstecken eines Stiftes in eine Bohrung oder das Aufstecken einer Bohrung auf einen Stift.

Ausgehend von einer Startpose, die beispielsweise aus einer vorhergehenden Posensuche bekannt ist, wird hierzu vorteilhafterweise ein bezüglich einer Fügerichtung rotationssymmetrischer Vorsprung zunächst in einem Winkel, der bevorzugt zwischen 10° und 80° liegt, gegen die Fügerichtung geneigt in eine Aussparung eingeführt, indem Vorsprung und/oder Aussparung durch einen Manipulator bewegt werden. Dies kann zur Reduzierung der Prozesszeit positionsgeregelt geschehen, wobei spätestens bei Kontakt für eine oder mehrere Richtungen in eine Kraft- oder Nachgiebigkeitsregelung umgeschaltet werden kann, um eine Beschädigung zu verhindern. Unter dieser Regelung wird dann vorzugsweise eine Vorspannkraft aufgeprägt, die ein Herausrutschen des Vorsprungs aus der Aussparung verhindert. Anschließend wird der Vorsprung in Fügerichtung orientiert und eingeschoben, wobei in einer bevorzugten Ausführung eine Schwingung senkrecht zur Fügerichtung und/oder eine Drehung um die Fügerichtungsachse aufgeprägt werden, um ein Verkanten während des Einfügens zu verhindern.

Soll hingegen ein nicht rotationssymmetrischer, beispielsweise dreieckiger Querschnitt gefügt werden, kann hierzu zunächst eine Ecke des Vorsprungs in eine Ecke der Aussparung platziert und anschließend wie vorstehend beschrieben der Vorsprung um eine Achse in die Fügerichtung umorientiert und anschließend unter Vibrieren senkrecht zur Fügerichtung eingeschoben werden.

Gleichermaßen kann nach dem Anfahren einer Ecke, beispielsweise mit einem viereckigen Querschnitt, zunächst um eine Achse und anschließend um eine weitere Achse umorientiert werden, um den Vorsprung in der angefahrenen Ecke abgestützt mit der Aussparung zu fluchten und so prozesssicher zu fügen.

Vorzugsweise umfasst ein Teilprozess ein Fügen mit mehreren formschlüssigen Fügeverbindungen, beispielsweise das Einführen eines Stiftes in eine Durchgangsbohrung und anschließend in eine dahinterliegende zweite Durchgangs- oder Sackbohrung, oder das Auf- bzw. Einstecken eines Zahnrades unter vorherigem, gleichzeitigem oder anschließenden In-Eingriff-Bringen mit einem anderen Zahnrad.

Beim Fügen eines Zahnrades wird vorzugsweise positions-, kraft- oder nachgiebigkeitsgeregelt eine Rotationsbewegung senkrecht zur Fügerichtung aufgeprägt, um die Verzahnungen miteinander zu fluchten.

Gemäß einer bevorzugten Ausführung der vorliegenden Erfindung umfasst ein Teilprozess ein Einschrauben eines Innen- auf ein Außengewinde bzw. eines Außen- in ein Innengewinde. Dabei kann, gegebenenfalls unter ein- oder mehrmaligem Umsetzen des Manipulatorwerkzeugs bei begrenztem Werkzeug-Schraubwinkel, zunächst verschraubt werden, bis anhand eines Kraftanstieges oder eines Verharrens in einer Pose trotz kommandierter Vorschubbewegung eine erste Schraubposition erreicht ist. Dies erfolgt vorzugsweise kraft- und/oder nachgiebigkeitsgeregelt. Anschließend kann in einer vorteilhaften Weiterbildung positionsgeregelt wenigstens eines der zu verschraubenden Werkstücke um einen vorgegebenen Winkel weitergedreht werden, um eine vorgegebene Verschraubungsvorspannung sicherzustellen.

Vorzugsweise umfasst ein Teilprozess ein Einmessen. Sind beispielsweise Bearbeitungs- oder Fügeposen relativ zu einem Werkstück definiert, um toleranzbedingte Abweichungen von dessen Position relativ zu einem Manipulator zu kompensieren, kann der Manipulator beispielsweise nacheinander ausgezeichnete Vorsprünge, Aussparungen oder Kanten des Werkstückes mit seinem Werkzeug suchen, wie vorstehend mit Bezug auf die Posensuche erläutert. Sind dadurch wenigstens drei Posen, über diese die kartesischen Positionen des Werkzeugs an dem Werkstück und damit drei ausgezeichnete Werkstückpunkte erfasst, kann durch diese ein Werkstück-Referenzsystem, das sogenannte BASE-Koordinatensystem automatisch festgelegt werden.

Gemäß der vorliegenden Erfindung umfasst ein Teilprozess eine Prozesserfolgsprüfung. Hierzu können Reaktionskräfte auf einen Manipulator erfasst, insbesondere geprüft werden, ob diese in einem vorgegebenen Bereich liegen. Wird zum Beispiel, wie vorstehend beschrieben, eine Schraube um nach Erreichen einer durch einen Kraftanstieg detektierten ersten Schraubposition um einen vorgegebenen Winkel weiter eingeschraubt, kann die hierbei auf den Manipulator wirkende Kraft, in diesem Fall ein Drehmoment um die Schraubachse, erfasst werden. Liegt dieses in einem vorgegebenen Bereich, ist die Schraube mit der gewünschten Vorspannung eingeschraubt.

Zusätzlich oder alternativ kann, insbesondere bei einer Nachgiebigkeits- oder Kraftregelung in wenigstens einer Richtung, die erreichte Pose oder ihre Komponenten in nachgiebigkeits- bzw. kraftgeregelten Richtungen mit vorgegebenen Werten verglichen werden. Wird beispielsweise, wie vorstehend beschrieben, ein Stift nachgiebigkeitsgeregelt in eine Bohrung eingeführt, kann erfasst werden, ob die erreichte Endposition, in der der Manipulator aufgrund der Nachgiebigkeitsregelung verharrt, einer vorgegebenen Fügeendposition entspricht.

Hierzu kann auch eine vorgegebene Kraft oder Bewegung kommandiert und dabei realisierte Bewegungen oder Reaktionskräfte erfasst und mit vorgegebenen Werten verglichen werden. So kann beispielsweise nach dem Fügen einer Rastverbindung diese in Löserichtung mit einer vorgegebenen Kraft oder einer vorgegeben Soll-Lösebewegung belastet und die dieser entgegenwirkende Kraft bzw. die erzielte Ist-Bewegung erfasst werden. Ist die entgegenwirkende Kraft zu gering oder die Ist-Bewegung zu groß, hat sich die Rastverbindung gelöst.

Eine Basisoperation kann eine Regelung, insbesondere das Umschalten zwischen einer Positions-, Kraft- und einer Nachgiebigkeitsregelung, vorzugsweise bei Erfassung eines Umgebungskontakts des Manipulators, umfassen.

Zusätzlich oder alternativ kann eine Basisoperation eine Bewegung umfassen. Vorzugsweise umfasst eine Basisoperation dabei eine automatische Bewegung des Manipulators derart, dass eine oder mehrere auf ihn wirkenden Kontaktkräfte reduziert, insbesondere vollständig abgebaut werden. Wurde beispielsweise, wie vorstehend erläutert, ein Vorsprung unter einem Winkel geneigt in eine Aussparung eingeführt und anschließend um eine Achse umorientiert, übt der eine Fügepartner in der umorientierten Stellung auf den anderen Fügepartner eine Vorspannkraft entgegen einer Toleranzrichtung aus, in der die beiden Fügepartner gegeneinander versetzt sind. Durch Erfassung dieser Kraft und entsprechende Ausweichbewegung in ihre Richtung kann der Manipulator beide Fügepartner vor dem Ein- bzw. Aufschieben miteinander fluchten und so die aufgrund des Versatzes wirkenden Kontaktkräfte abbauen.

Eine Basisoperation kann eine Prüfung einer Bedingung, insbesondere eines Abbruchkriteriums umfassen. Ein solches Abbruchkriterium kann beispielsweise erfüllt sein, wenn ein Manipulator seine Pose für eine vorgegebene Zeitdauer nicht oder nur innerhalb einer vorgegebenen Toleranz verändert. Damit kann insbesondere bei nachgiebigkeits- oder kraftgeregelten Bewegungen eine erreichte Endpose erfasst werden.

Gemäß einer bevorzugten Ausführung der vorliegenden Erfindung umfasst eine Basisoperation eine Nachgiebigkeits- und/oder eine Kraftregelung, insbesondere das Umschalten von bzw. in eine solche und/oder eine nachgiebigkeits- bzw. kraftgeregelte Manipulatorbewegung.

Eine Nachgiebigkeitsregelung bezeichnet im Sinne der vorliegenden Erfindung insbesondere eine Regelung, bei der ein Manipulator einer an ihm angreifenden äußeren Kraft einen in vorgegebener Weise reduzierten Widerstand entgegensetzt bzw. ihr, gegebenen unter Aufbau einer vorgegebenen Rückstellkraft oder Kompensation einer Gewichtskraft, ausweicht. Dies kann in einfacher Weise durch Reduzierung eines Proportional- und/oder Differentialanteils und/oder Eliminierung eines Integralanteils einer PID-Einzelgelenkregelung oder durch Begrenzung der Antriebskräfte der Manipulatorantriebe auf einen Wert realisiert werden, der niedriger ist als für einen Antriebsschutz erforderlich, wobei vorliegend zur kompakteren Darstellung auch antiparallele Kräftepaare, i.e. Drehmomente verallgemeinernd als Kräfte bezeichnet werden. Bevorzugt wird eine Nachgiebigkeitsregelung jedoch durch eine Impedanzregelung, bei der der Manipulator positionsgeregelt entsprechend einem vorgegeben dynamischen Verhalten, etwa dem Kraftgesetz einer Feder oder einem Masse-Dämpfer-Feder-System, durch eine Posenänderung auf eine auf ihn einwirkende Kraft reagiert, durch eine Admittanzregelung, bei der der Manipulator kraftgeregelt gemäß einem vorgegeben dynamischen Verhalten mit entsprechenden Antriebskräften auf eine Posenänderung reagiert, oder Modifikationen bzw. Kombinationen dieser Regelungen realisiert. Einen Überblick über solche insbesondere für Leichtbauroboter geeigneten Nachgiebigkeitsregelungen gibt beispielsweise A. Albu-Schäffer et al., "Cartesian Impedance Control Techniques for Torque Controlled Light-Weight Robots", Proc. IEEE Int. Conf. on Robotics & Automation, Washington DC, 2002, Seiten 657-663. Vorzugsweise kann einer Nachgiebigkeitsregelung eine Kraftregelung derart hinzugefügt werden, dass zusätzlich zu der Kraft, die sich aus dem vorgegeben dynamischen Verhalten ergibt, eine vorgegebene, beispielsweise konstante Kraft, als vom Manipulator auszuübende Sollkraft vorgegeben bzw. geregelt wird.

Prozessmodule können beispielsweise als Funktionsaufrufe in einer herkömmlichen Programmiersprache zur Programmierung von Manipulatoren, beispielsweise der Sprache KRL der Anmelderin, implementiert, insbesondere programmiert und/oder verwendet werden.

Eine Parametrierung kann vorzugsweise durch entsprechende Eingabe, Verwendung von Default-Werten und/oder Wertübernahme aus anderen Applikationen, beispielsweise einem Datensatz für ein Manipulatormodell, für Regelparameter und/oder Prozess-, insbesondere Werkzeug- und/oder Werkstückparameter erfolgen. Ein Teil der Parameter kann insbesondere automatisch, beispielsweise auf Basis der Kinematik, des Prozesses, des Werkzeuges und/oder des Werkstückes, etwa von Toleranzen, Material, Form und dergleichen erzeugt oder übernommen werden. Beispielsweise kann ein Montageprozess in einer Simulationsumgebung definiert werden, in der dann alle relevanten Daten in Form von Modelldaten vorliegen. Über ein Programm werden dann in einer bevorzugten Ausführung automatisch die erforderlichen Prozessmodule ausgewählt und (teil-)parametriert. In einem zweiten Schritt werden dann diejenigen Parameter, die nicht automatisch ermittelt wurden, manuell von einem Anwender gesetzt.

In einer vorteilhaften Weiterbildung können solche Prozessmodule auch in einer graphischen Programmierumgebung bzw. -oberfläche implementiert werden. Dies ermöglicht in besonders einfacher Weise auch Anwendern ohne Expertenkenntnisse die Programmierung auch komplexer Manipulatorprozesse. Daher ist ein nachfolgend näher erläuterter Programmierumgebungsaspekt der vorliegenden Erfindung, der grundsätzlich auch unabhängig von dem vorstehend erläuterten Prozessmodulbibliotheksaspekt verwirklicht werden kann, bevorzugt mit diesem Prozessmodulbibliotheksaspekt kombiniert.

Gemäß dem Programmierumgebungsaspekt der vorliegenden Erfindung wird eine graphische Programmierumgebung zur Programmierung eines Manipulatorprozesses, insbesondere eines vorstehend mit Bezug auf den Prozessmodulbibliotheksaspekt beschriebenen Prozesses, zur Verfügung gestellt bzw. genutzt, die mehrere graphische Funktionsmodule zur Durchführung von je einem Teilprozess aufweist, mittels derer diese Teilprozesse programmiert bzw. implementiert werden können.

Erfindungsgemäß können nun ein oder mehrere Teilprozesse und/oder ein oder mehrere Manipulatoren bereits während der Programmierung, insbesondere online, mittels dieser Funktionsmodule gesteuert werden. Dabei wird unter einer Steuerung eines Teilprozesses bzw. Manipulators, insbesondere eines Industrieroboters, insbesondere eine Aktuierung eines Manipulatorwerkzeugs und/oder einer Manipulatorperipherie, beispielsweise einer Werkstückaufnahme, eines Dreh- und/oder Kipptisches, einer externe Klebedüse oder dergleichen, eine Bewegung des Manipulators, eine Umschaltung seines Zustandes, insbesondere einer Regelung und dergleichen verstanden, wobei auch ein Steuern unter Berücksichtigung rückgeführter Messgrößen, i.e. ein Regeln, zur kompakteren Darstellung als Steuern bezeichnet wird. Auch eine Abfrage und/oder Speicherung einer Manipulatorpose oder eines Manipulator- oder Peripheriezustandes mittels eines Funktionsmoduls wird als Steuern dieses Teilprozesses bzw. Manipulators mittels dieses Funktionsmoduls bezeichnet.

Erfindungsgemäß dient somit ein graphisches Funktionsmodul sowohl der Programmierung, insbesondere der Erstellung eines Arbeitsprogramms, als auch der, vorzugsweise gleichzeitigen bzw. parallelen, Steuerung eines oder mehrerer Manipulatoren und/oder Teilprozesse, insbesondere einer uni- oder bidirektionalen, interaktiven Steuerung, in der der Anwender Aktionen des bzw. der Manipulatoren kommandiert und/oder diese Informationen, beispielsweise bezüglich ihrer Pose(n), Zustände und dergleichen, übermitteln. Insbesondere in Verbindung mit dem vorstehend erläuterten Prozessmodulbibliotheksaspekt kann vorteilhafterweise auch eine Parametrierung eines Prozessmoduls dadurch erfolgen, dass ein entsprechendes Funktionsmodul aktiviert und über dieses Parameter eingegeben oder verändert werden. Dabei können auch durch einen von einem Funktionsmodul gesteuerten Manipulator Parameter erfasst und das Prozessmodul automatisch entsprechend parametriert werden. Beispielsweise kann durch ein Funktionsmodul ein Robotergreifer geschlossen, dabei durch eine Kraftmessung des Roboters eine Schließkraft erfasst und diese als Parameter, beispielsweise als Soll- oder Maximalwert, automatisch als Parameter in einem Prozessmodul übernommen werden. Gleichermaßen können beispielsweise durch ein Funktionsmodul eine Applikation wie etwa eine CAD-Applikation aufgerufen und aus dieser Parameter für ein Prozessmodul übernommen werden.

Im Gegensatz zu der bekannten sequentiellen Programmierung in einer Hochsprache mit anschließendem Teachen der dabei zugrundegelegten Posen, Laden des fertig erstellten Programms in eine Manipulator- oder Prozesssteuerung, Testen und häufig mehrfach iterativem Durchlaufen dieser Sequenz kann so auch ein Anwender ohne Expertenwissen sehr intuitiv einen Manipulatorprozess programmieren.

Beispielsweise wird bisher das Anfahren einer Greifpose auf einer geraden Bahn, das anschießende Schließen des Greifers, das Verfahren in eine Montagepose mit anschießendem Öffnen des Greifers und Zurückfahren in eine Ausgangspose, umständlich sequentiell programmiert, indem in einer Hochsprache zunächst abstrakt die einzelnen Basisbefehle "Anfahren einer ersten Pose", "Schließen des Greifers", "Anfahren einer zweiten Pose", "Öffnen des Greifers" und "Anfahren einer dritten Pose" programmiert werden. Anschließend wird der Manipulator in die Greifpose, Montagepose und Ausgangspose gefahren , diese gespeichert und der ersten, zweitem bzw. dritten programmierten Pose zugeordnet, bevor das so erstellte Programm kompiliert, in die Manipulatorsteuerung geladen und getestet wird. Ergibt sich dabei ein Änderungsbedarf, der beim abstrakten Programmieren noch nicht erkennbar war, muss dieser sequentielle Prozess aufwändig mehrfach durchlaufen werden.

Im Gegensatz hierzu kann gemäß einer Ausführung der vorliegenden Erfindung der Manipulator bereits online während des Programmierens durch das aufgerufene Funktionsmodul "Anfahren einer Pose" gesteuert werden, indem beispielsweise durch Aufrufen des Funktionsmoduls eine Eingabemöglichkeit für das Führen des Manipulators in eine Pose und das Speichern dieser geteachten Pose als Pose des Funktionsmoduls implementiert wird. Somit kann direkt bei der Programmierung der Manipulator entsprechend bewegt werden, so dass auch ein wenig geschulter Anwender ein Programm erstellen kann, indem er sukzessive von einer jeweils angesteuerten Pose oder abgeschlossenen Aktion ausgehend das nächste Funktionsmodul auswählt.

Vorzugsweise ist das erstellte (Teil)Programm bereits während der Programmierung, i.e. dem Hinzufügen weiterer Funktionsmodule, funktionsfähig und ermöglicht so ein Testen bzw. Verbessern. Insbesondere kann vorgesehen sein, dass die Funktionsmodule bzw. die durch sie implementierten Teilprozesse bereits beim Programmieren direkt ausführbar sind, also beispielsweise durch Aufrufen bzw. Aktivieren eines Funktionsmoduls, welches eine Bewegung abbildet, diese Bewegung unmittelbar ausführbar ist.

Wie eingangs erläutert, kann in einer bevorzugten Ausführung ein Funktionsmodul ein Prozessmodul oder einen Basisbefehl einer Prozessmodulbibliothek nach dem Prozessmodulbibliotheksaspekt abbilden, so dass insbesondere Merkmale, die in Zusammenhang mit dem Prozessmodulbibliotheksaspekt beschrieben sind, einzeln oder in Kombination auch gemäß dem Programmierumgebungsaspekt verwirklicht sein können. So können beispielsweise auch in der graphischen Programmierumgebung Default-Werte für vom Anwender eingeb- oder veränderbare Parameter vorgesehen sein, die automatisch übernommen werden, sofern der Anwender sie nicht aktiv verändert. Gleichwohl können nach diesem Aspekt auch einfache, aus Basisbefehlen aufgebaute Manipulatorprozesse wie die vorstehend erläuterte Montage auf einer geraden Bahn von Greif- in Montagepose nunmehr intuitiv und ohne Expertenwissen vom Anwender programmiert werden.

Gemäß einer bevorzugten Ausführung ist einem Funktionsmodul eine graphische Repräsentation in Form eines Icons auf einer Anzeigeoberfläche zugeordnet. Ein solches Icon umfasst vorzugsweise eine Repräsentation einer Kinematik, Aktion und/oder einer, vorzugsweise von der Kinematik und/oder Aktion abhängigen, Information. Bevorzugt ändert sich diese Repräsentation in Abhängigkeit von einer Parametrisierung des ausgewählten Funktionsmoduls. Beispielsweise kann die Kinematik zunächst eine repräsentative Grundpose des zu steuernden Manipulators darstellen, nach Parametrisierung des ausgewählten Funktionsmoduls beispielsweise die durch das Funktionsmodul realisierte Endpose. Zusätzlich oder alternativ kann die durch das Funktionsmodul realisierte Aktion des Manipulators, etwa eine Bewegung oder Werkzeugaktuierung, durch eine Filmsequenz, symbolisiert werden, um die intuitive Programmierung weiter zu erleichtern.

Bevorzugt ist ein Funktionsmodul durch Berühren einer Anzeigeoberfläche, insbesondere eines Touchscreens, handhabbar, beispielsweise, etwa durch Anklicken, Drag&Drop und dergleichen, auswähl-, positionier-, insbesondere verschieb- und/oder verankerbar, aufruf- und/oder (de)aktivierbar. Beispielsweise kann ein Anwender ein Funktionsmodul aus einer Funktionsmodulbibliothek, in der verfügbare Funktionsmodule angezeigt werden, durch Berühren eines Icons auswählen, in einen Arbeits- bzw. Programmierbereich verschieben, dort durch Loslassen verankern und durch erneutes Antippen, gegebenenfalls von sich öffnenden Eingabefenstern oder -tasten, aktivieren.

Funktionsmodule sind vorzugsweise in Abhängigkeit von ihrer Position automatisch verknüpfbar. Beispielsweise kann automatisch eine Verknüpfung zweier Funktionsmodule derart erfolgen, dass im Manipulatorprozess zunächst das obere oder linke und nach dessen Ausführung das untere bzw. rechte ausgeführt wird, indem das anschließend auszuführende Funktionsmodul in der Nähe des zuerst auszuführenden Funktionsmoduls unter bzw. rechts von diesem positioniert wird. Zusätzlich oder alternativ ist es auch möglich, solche Verknüpfungen zu erstellen bzw. zu ändern, indem Repräsentationen der Verknüpfungen, etwa Striche oder Pfeile zwischen Icons, durch Berühren verändert und beispielsweise mit anderen Icons verknüpft werden können.

Gemäß einer bevorzugten Ausführung sind ein oder mehrere Elemente eines Funktionsmoduls in Abhängigkeit von einem Anwenderstatus veränderbar. Beispielsweise können höherrangige Anwender Parameter wahlweise zur Veränderung durch niederrangige Anwender freigeben oder sperren. Gleichermaßen können so bestimmte Elemente, etwa Eingabemöglichkeiten oder Parameter, in Abhängigkeit von einem Anwenderstatus angezeigt oder verborgen werden, um die Übersichtlichkeit und Fehlerfreiheit für weniger geschulte Anwender zu verbessern.

Weitere Vorteile und Merkmale ergeben sich aus den Unteransprüchen und den Ausführungsbeispielen. Hierzu zeigt, teilweise schematisiert:
- Fig. 1:: eine Posensuche nach einer Ausführung der vorliegenden Erfindung;
- Fig. 2A:: ein Fügen unter Anfahren einer Ecke unter anschließender Umorientierung um zwei Achsen nach einer Ausführung der vorliegenden Erfindung in einer Draufsicht;
- Fig. 2B:: das Fügen nach Fig. 2A in seitlicher Ansicht;
- Fig. 3:: ein Fügen zweier Zahnräder nach einer Ausführung der vorliegenden Erfindung;
- Fig. 4:: ein Einschrauben einer Schraube nach einer Ausführung der vorliegenden Erfindung; und
- Fig. 5: eine graphische Programmierumgebung nach einer Ausführung der vorliegenden Erfindung.

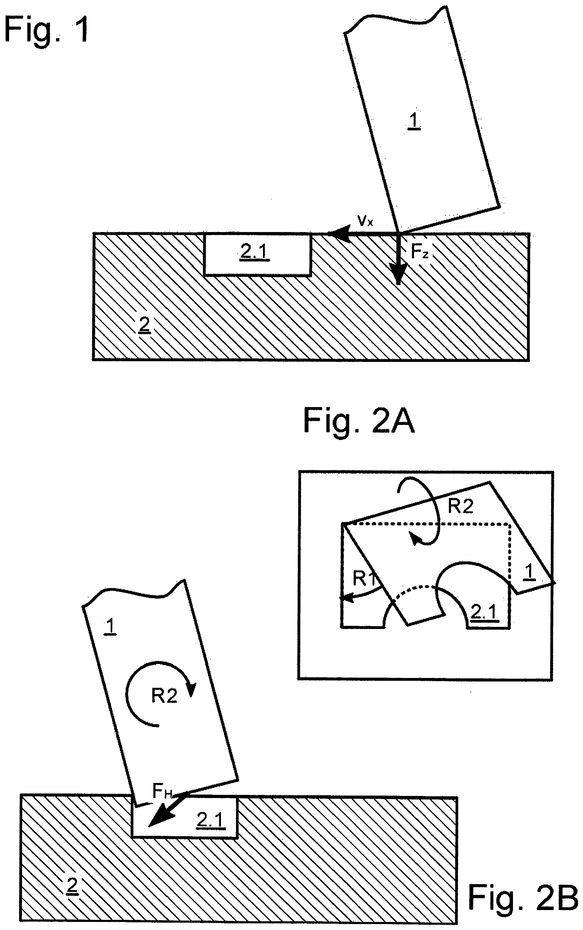

Fig. 1 zeigt eine durch eine Prozessmodul nach einer Ausführung der vorliegenden Erfindung programmierte Posensuche.

Hierzu setzt ein Leichtbauroboter (nicht dargestellt) lagegeregelt einen Stift 1 unter einem Winkel von 15° gegen eine Einführrichtung (vertikal in Fig. 1) einer zu suchenden Aussparung 2.1 in der abzusuchenden Oberfläche eines Werkstückes 2 geneigt auf dieses auf und schaltet bei Kontakt sofort in eine Nachgiebigkeitsregelung in wenigstens einer kartesischen Translations- und/oder Rotationsrichtung, um eine Beschädigung des Werkstückes 2 zu verhindern.

Senkrecht zur abzusuchenden Oberfläche wird nun kraft- oder nachgiebigkeitsgeregelt eine Kraft F_{z} aufgeprägt, um den Stift 1 beim Überfahren in die Aussparung 2.1 vorzuspannen. In einer Suchrichtung vₓ wird der Stift nachgiebigkeitsgeregelt verfahren, indem ein Endpunkt einer virtuellen Feder, die zwischen diesem und dem Stift 1 durch die Nachgiebigkeitsregelung nachgebildet wird, in Suchrichtung vₓ bewegt wird. Senkrecht zur Suchrichtung und parallel zur abzusuchenden Oberfläche wird der Roboter positionsgeregelt, um die vorgegebene Suchbahn abzufahren.

Diese kann beispielsweise durch eine oder mehrere Geraden, Zichzack-, Kreis- oder Spiralbahnen auf der abzusuchenden Oberfläche vorgegeben sein. Gleichermaßen kann in einer Richtung parallel zur abzusuchenden Oberfläche und senkrecht zur Suchrichtung und/oder in Suchrichtung auch eine wechselnde, beispielsweise sinusförmige Kraft aufgeprägt werden, um eine Sinusbahn oder Lissajousfigur abzufahren.

Überfährt der Stift 1 die Aussparung 2.1, drückt die Kraft F_{z} ihn in diese, so dass einer Weiterbewegung ein Widerstand entgegengesetzt wird. Die Roboterregelung erfasst einen entsprechenden Anstieg einer Kontaktkraft in vₓ-Richtung bzw. ein Verharren trotz kommandierter Weiterbewegung des Endpunkts der virtuellen Feder und erkennt so, dass der Stift 1 in der gesuchten Aussparung 2.1 ist, wodurch die gesuchte Pose des Roboters, beispielsweise eine Startpose für ein Fügen des Stiftes 1 in die Aussparung 2.1, gefunden ist.

Um diese komplexe Suche mit Umschalten zwischen verschiedenen Regelungen, Erfassen von Kontaktkräften und Definition geeigneter Suchbahnen zu erleichtern, wurde einmalig vorab aus Basisbefehlen, die die oben genannten atomaren und molekularen Basisoperationen kommandieren, ein Montagemodul "search(p1, p2, p3, p4, p5, p6, p7, p8, p9, p10)" in einer Montagemodulbibliothek bereitgestellt, das über die Parameter p1 - p10 parametrisierbar ist.

Dabei definiert Parameter p1, ob mit einem Vorsprung 1 eine Aussparung 2.1 oder umgekehrt mit einer Aussparung ein Vorsprung eines Werkstückes gesucht werden soll. Parameter p2 definiert die Form der Suchbahn, beispielsweise als gerade, Zickzack-, Spiral-, sinusförmige oder Lissajousbahn. Parameter p3 definiert eine Kontaktkraft oder einen Schleppfehler zum Endpunkt der virtuellen Feder, bei deren Erreichen die Suche beendet ist, Parameter p4 eine Pose zur Bestimmung einer Startpose für die Suche, beispielsweise die Endpose eines toleranzfreien Fügevorgangs, Parameter p5 die Anpresskraft F_{z}. Parameter p6, p7 beschreiben die Bahngeschwindigkeit in Suchrichtung und die Breite der Suchbahn bzw. bei Lissajousbahnen die Amplituden in Suchrichtung und senkrecht hierzu. Parameter p8 definiert eine Frequenz oder eine Radiusvergrößerung der Suchbahn, die Parameter p9, p10 eine Frequenz und Amplitude einer optionalen Rotationsbewegung um die Längsachse des Stiftes 1.

Man erkennt, dass man nur durch die Vorgabe weniger Parameter unterschiedlichste komplexe Posensuchen programmieren kann.

Fig. 2A, 2B zeigen ein durch eine Prozessmodul nach einer Ausführung der vorliegenden Erfindung programmiertes Fügen unter Anfahren einer Ecke unter anschließender Umorientierung um zwei Achsen in einer Draufsicht bzw. seitlichen Ansicht. Es kann insbesondere im Anschluss an die vorstehend mit Bezug auf Fig. 1 erläuterte Posensuche erfolgen, indem ein entsprechendes, nachfolgend näher erläutertes Montagemodul "peg_in_hole()" mit dem Modul "search()" verknüpft wird. Dabei kann die Posensuche mit dem zu fügenden Werkstück oder einem eigenen Werkzeug erfolgen.

Man erkennt in der Draufsicht der Fig. 2A den komplexeren, brückenförmigen Querschnitt des Stiftes 1 bzw. der Aussparung 2.1.

Zum Fügen führt der Leichtbauroboter zunächst positionsgeregelt eine Spitze (links oben in Fig. 2A) des unter 15° gegen die Fügerichtung (vertikal in Fig. 2B) geneigten Stiftes 1 in die Aussparung 2.1 ein und schaltet bei Kontakt sofort in eine Nachgiebigkeitsregelung in den drei kartesischen Translations- und Rotationsrichtungen, um eine Beschädigung des Werkstückes 2 zu verhindern. Gleichermaßen kann, wie vorstehend ausgeführt, die bei der Posensuche gefundene Pose (vgl. Fig. 1) als Startpose zum Fügen genutzt werden.

Nun wird dem Stift 1 eine Sollkraft F_{H} (vgl. Fig. 2B) aufgeprägt, die eine Komponente in Fügerichtung (vertikal nach unten in Fig. 2B) und eine Komponente zu der Kante (links oben) der Aussparung 2.1 aufweist, in der die eingeführte Spitze anliegen soll, indem beispielsweise der Endpunkt der virtuellen Feder in oder hinter diese Kante gelegt wird. Hierdurch wird der Stift 1 bei den nachfolgenden Umorientierungen in der Aussparung 2.1 gehalten und seine in Fig. 2A linke obere Spitze zu der zugeordneten Kante gezogen.

Dann wird der Stift zunächst um eine erste Achse, beispielsweise seine Längsachse, derart umorientiert, dass eine kürzere Seitenfläche, zum Beispiel seine linke Seitenfläche, in Anlage mit der entsprechenden Innenfläche der Aussparung 2.1 gelangt, wie in Fig. 2A durch den Rotationspfeil R1 angedeutet. Anschließend wird der Stift um eine zweite Achse, beispielsweise seine obere Stirnkante, derart umorientiert, dass seine Längsachse mit der Längsachse der Aussparung 2.1 fluchtet, wie in Fig. 2A, 2B durch den Rotationspfeil R2 angedeutet, wobei der Kontakt zwischen Stift und Aussparung während diesen Umorientierungen durch die aufgeprägte Kraft F_{H} sichergestellt wird.

Nun wird der Stift 1 nachgiebig bzw. kraftgeregelt in Fügerichtung (von oben nach unten in Fig. 2B) in die Aussparung 2.1 eingeschoben, wobei senkrecht zu dieser Richtung eine mikroskopische Vibration erzeugt wird, um ein Verklemmen bzw. -kanten prozesssicher zu verhindern. Beispielsweise wird zum Einschieben der Endpunkt der virtuellen Feder in Fügerichtung verschoben und zusätzlich eine konstante Kraft in Fügerichtung aufgeprägt. Übersteigt die erfasste Reaktionskraft aufgrund der Anlage des Stiftes 1 im Aussparungsgrund einen vorgegebenen Grenzwert, verharrt der Leichtbauroboter trotz kommandierter Weiterbewegung in der durch den Aussparungsgrund definierten Fügeendpose, oder sinkt seine Fügegeschwindigkeit auf Null, kann ein Ende des Fügevorgangs erfasst werden.

In ähnlicher Weise kann auch ein Fügen mit zur Fügerichtung rotationssymmetrischem Querschnitt und ein Fügen unter Anfahren einer Ecke unter anschließender Umorientierung um nur eine Achs erfolgen. Beim Fügen rotationssymmetrischer Querschnitte kann der Einschubbewegung vorteilhaft eine Rotation oder ein Drehmoment um die Fügerichtung überlagert werden, um ein Verklemmen zu verhindern. Dabei kann anstelle einer ausgezeichneten Ecke ein beliebiger Punkt des Stirnumfanges durch Vorgabe einer Haltekraft F_{H} während der Umorientierung in der Aussparung gehalten werden.

Ob bei nicht rotationssymmetrischen Querschnitten um nur eine Achse umorientiert wird, um die anfängliche Schrägstellung, die ein Eintauchen einer Ecke in die Aussparung gewährleistet, zu kompensieren, oder wie vorstehend mit Bezug auf Fig. 2A, 2B erläutert, sukzessive um zwei Achsen, wird vorteilhafterweise insbesondere danach bestimmt, ob aufgrund der geometrischen Bedingungen, insbesondere der durch den Querschnitt begrenzten möglichen anfänglichen Eintauchtiefe, die Gefahr besteht, dass der Vorsprung während der Umorientierung aus der Aussparung herausgleitet, wie dies beispielsweise bei rechteckförmigen Querschnitten der Fall ist. Entsprechend können beispielsweise dreieckige Querschnitte unter nur einmaligem Umorientieren gefügt werden

Um diese unterschiedlichen, komplexen Fügevorgänge mit Umschalten zwischen verschiedenen Regelungen, Erfassen von Kontaktkräften und Definition geeigneter Eintauch-, Umorientierungs- und Einschubbewegungen zu erleichtern, wurde einmalig vorab aus Basisbefehlen, die die oben genannten atomaren und molekularen Basisoperationen kommandieren, ein Montagemodul "peg_in_hole(p1, p2, p3, p4, p5, p6, p7, p8, p9, p10, p11)" in einer Montagemodulbibliothek bereitgestellt, das über die Parameter p1 - p11 parametrisierbar ist.

Dabei definiert Parameter p1 wie bei der Posensuche, ob ein Vorsprung 1 in eine Aussparung 2.1 eingeführt oder umgekehrt eine Aussparung auf einen Vorsprung eines Werkstückes aufgeschoben werden soll. Parameter p2 definiert die Orientierung des toleranzfrei gefügten Werkstückes. Parameter p3 definiert, ob es sich um einen rotationssymmetrischen Querschnitt handelt, oder ob ein Querschnitt mit wenigstens einer Ecke um eine oder um zwei Achsen umorientiert werden soll. Parameter p4, p5 begrenzen eine maximale Kraft in Fügerichtung bzw. senkrecht hierzu. Parameter p6, p7 definieren ein maximales Moment, das um eine Umorientierungsachse bzw. eine Fügerichtung aufgeschaltet wird, um ein Verklemmen zu verhindern. Parameter p8 begrenzt die maximale Fügegeschwindigkeit. Parameter p9, p10 wählen das Abbruchkriterium, i.e. ob bei Unterschreiten einer Bewegungsgeschwindigkeit oder einer Posenänderung eine Endpose erfasst wird, und dessen Wert, beispielsweise eine minimale Bewegungsgeschwindigkeit oder Posenänderung. Parameter p11 bestimmt die Zeitdauer, für die das Abbruchkriterium gemäß p9, p10 erfüllt sein muss, um eine Endpose zu erfassen.

Man erkennt, dass auch hier durch die Vorgabe weniger Parameter unterschiedlichste komplexe Fügevorgänge programmiert werden können.

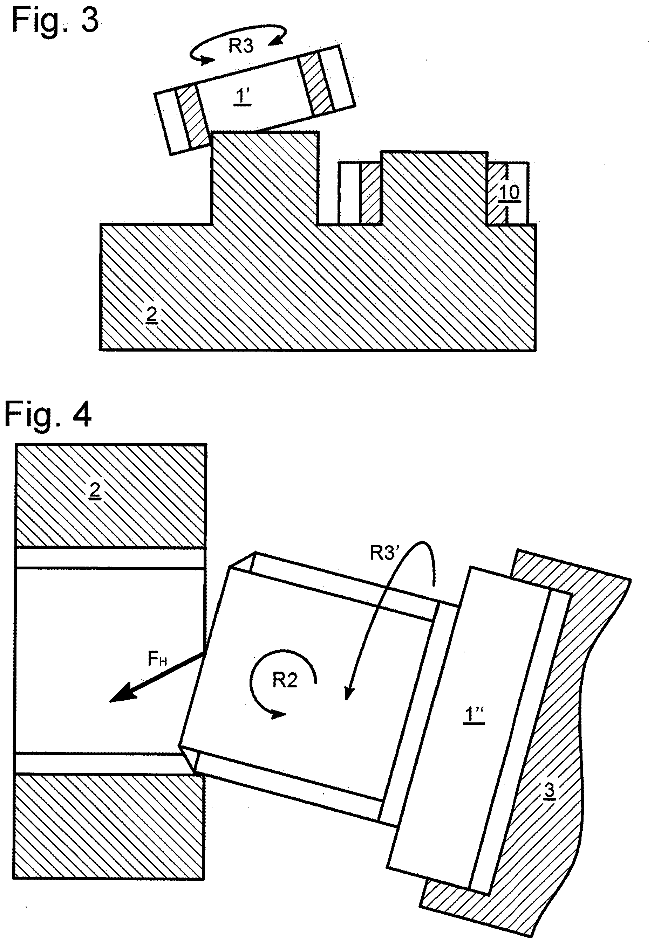

Fig. 3 zeigt ein durch eine Prozessmodul nach einer Ausführung der vorliegenden Erfindung programmiertes Fügen zweier Zahnräder 1', 10.

Dieses erfolgt im Wesentlichen in gleicher Weise wie das vorstehend erläuterte Fügen eines rotationssymmetrischen Vorsprungs mit einer Aussparung. Um ein prozesssicheres Fügen zu gewährleisten, wird der Einschubbewegung eine Rotationsbewegung überlagert, wie dies vorstehend bereits zum Vermeiden eines Verklemmens erläutert wurde. Doch muss die Rotationsbewegung zur Ausrichtung der Zahnräder eine deutlich größere Amplitude aufweisen als eine Mikro-Rotationsbewegung zum Vermeiden eines Verklemmens, und zudem jedenfalls dann, wenn spätestens beim Beginn der Fügebewegung auch die Verzahnungen in Eingriff miteinander kommen, wie dies beim Aufstecken von Zahnrädern auf kurze Achsen bzw. mit kurzen Wellen der Fall ist, bereits beim Anfahren der Fügestartpose und einem Umorientieren nach anfänglichem Eintauchen des Vorsprungs in die Aussparung durchgeführt werden, während umgekehrt beim Fügen mit nur einer formschlüssigen Verbindung, i.e. ohne zweite, durch die Verzahnung gebildete formschlüssige Verbindung, die Rotationsbewegung zum Vermeiden eines Verklemmens erst nach erfolgtem Eintauchen und Umorientieren erfolgen soll.

Grundsätzlich könnten diese Unterschiede auch durch zusätzliche Parameter im vorstehend erläuterten Montagemodul "peg_in_hole()" berücksichtigt werden. Um jedoch die Anzahl der Parameter und so einerseits die Komplexität der Montagemodule und andererseits die erforderliche Parametrisierung durch den Anwender zu begrenzen, kann es sinnvoll sein, für das Aufstecken eines Zahnrades ein eigenes Montagemodul "gear(p1, p2, p3, p4, p5, p6, p7, p8, p9, p10)" in der Montagemodulbibliothek zur Verfügung zu stellen, dessen Parameter p1 - p10 den Parametern p1, p2, p4-p11 des Moduls "peg_in_hole()" entsprechen. Dessen Parameter p3, der angibt, ob eine Ecke vorliegt und gegebenenfalls eine Umorientierung um zwei Achsen durchgeführt werden soll, kann aufgrund der rotationssymmetrischen Zahnradwelle bzw. -achse entfallen.

Wie beim mit Bezug auf Fig. 2 erläuterten Fügen kann auch beim durch "gear()" programmierten Aufstecken eines Zahnrades 1' zunächst positionsgeregelt eine Fügestartpose angefahren oder mittels vorgeschalteter Posensuche gesucht werden, in der das zu fügende Zahnrad 1' um einen Winkel gegen die Fügerichtung gekippt ist. Bei Kontakt mit dem das andere Zahnrad 10 tragenden Bauteil 2 wird in eine Nachgiebigkeitsregelung umgeschaltet bzw. diese aus der Posensuche beibehalten. Gleichzeitig wird dem Zahnrad 1' eine Rotationsbewegung um seine Drehachse aufgeprägt, um es mit der Verzahnung des anderen Zahnrades 10 auszurichten. Diese kann durch eine kommandierte Rotationsbewegung oder ein wechselndes Drehmoment um die Drehachse realisiert sein. Ebenso kann die Einschubbewegung durch eine Vorschubbewegung eines Endpunktes einer virtuellen Feder oder eine vorgegebene Kraft in Einschubrichtung bewirkt werden.

Fig. 4 zeigt ein durch eine Prozessmodul nach einer Ausführung der vorliegenden Erfindung programmiertes Einschrauben einer in einem Greifer 3 eines im übrigen nicht dargestellten Leichtbauroboters geführten Schraube 1" in eine Durchgangsbohrung eines Werkstückes 2.

Dieses erfolgt in ähnlicher Weise wie das vorstehend mit Bezug auf Fig. 2, 3 erläuterte Fügen: ist die Schraube 1" noch nicht in die Bohrung eingeschraubt, fährt der Roboter die gegen die Einschraubrichtung um einen Winkel von 15° geneigte Schraube positionsgeregelt in eine Fügestartpose (vgl. Fig. 4), in der sie schrägt in die Bohrung eintaucht, und schaltet bei Kontakt in eine Nachgiebigkeitsregelung um, in der eine Haltekraft F_{H} aufgeprägt wird, um die Schraube bei der anschließenden Umorientierung sicher in der Bohrung zu halten.

Dann wird, wie in Fig. 4 durch den Rotationspfeil R2 angedeutet, die Schraube 1" derart umorientiert, dass ihre Längsachse mit der der Bohrung fluchtet.

Dabei wird sie, wie in Fig. 4 durch den Rotationspfeil R3' angedeutet, entgegen der Schraubrichtung gedreht, um ein Verklemmen der Gewinde zu verhindern. Kann der Robotergreifer 3 keine unbegrenzten Drehungen um die Schraubachse ausführen, wird er hierzu vorab in Schraubrichtung verdreht, um eine ausreichende Drehwinkelreserve für diese Negativdrehung R3' während der Umorientierung zu haben.

Fluchten Schraube 1" und Bohrung, wird unter Umkehrung der Rotation R3' die Schraube 1" in die Bohrung eingeschraubt, indem eine Nachgiebigkeitsregelung mit überlagerter Kraftregelung eine Vorschubkraft in Einschraubrichtung und ein Drehmoment bzw. eine Drehbewegung um diese Einschraubrichtung aufprägt.

Kann der Robotergreifer 3 keine unbegrenzten Drehungen um die Schraubachse ausführen, wird er bei Erreichen seiner maximalen Verdrehung in Einschraubdrehrichtung von der Schraube 1" gelöst, von dieser entfernt, entgegen der Schraubrichtung verdreht, um eine Drehwinkelreserve für das weitere Einschrauben aufzubauen, anschließend wieder an der Schraube angesetzt und diese, gegebenenfalls unter mehrmaliger Widerholung dieses Umsetzens, eingeschraubt, bis ein Abbruchkriterium erfüllt ist. Ist die Schraube 1", beispielsweise manuell, bereits mit einigen Gängen in die Bohrung eingeschraubt, kann der Einschraubprozess auch erst an dieser Stelle beginnen.

Ein Abbruchkriterium kann insbesondere in einem Erreichen bzw. Überschreiten eines vorgegebenen Drehmomentes aufgrund eines vollständigen Einschraubens der Schraube 1" oder gleichermaßen in einem Absinken der Geschwindigkeit bzw. einer fehlenden Veränderung der Pose bestehen, die bei nachgiebigkeitsgeregeltem Einschrauben mit Erreichen der Schraubenkopfauflage eintreten. Optional kann anschließend mit einer Positionsregelung um einen vorgegebenen Winkel weiter eingeschraubt und dabei das entgegenwirkende Drehmoment erfasst werden. Durch den Vergleich dieser Werte kann der Prozesserfolg geprüft werden, i.e. ob die Schraube mit der gewünschten Vorspannung eingeschraubt wurde.

Um diesen komplexe Ablauf zu erleichtern, wurde einmalig vorab aus den oben erläuterten Basisbefehlen zum Umschalten zwischen verschiedenen Regelungen, Erfassen von Kontaktkräften, Vorgabe gewünschter Bewegungen und Aufprägung vorgegebener Kräfte ein Montagemodul "screw(p1, p2, p3, p4, p5, p6, p7, p8, p9)" in einer Montagemodulbibliothek bereitgestellt, das über die Parameter p1 - p9 parametrisierbar ist.

Dabei definiert Parameter p1 eine Startpose für den Einschraubvorgang, p2 eine vorgegebene Kraft in Einschraubrichtung. Parameter p3 gibt an, ob die Schraube bereits im Gewinde eingeschraubt ist oder erst robotergestützt in die Bohrung eingesetzt werden soll. Parameter p4 definiert ein Solldrehmoment für ein drehmomentgesteuertes Schrauben, Parameter p5, p6 ein Drehmoment, das beim kraftgeregelten Schrauben maximal erreicht werden darf bzw. minimal erreicht werden muss. Parameter p7 gibt einen Winkel an, um den nach Erreichen der Endpose beim drehmomentgeregelten Schrauben weitergedreht werden soll, Parameter p8, p9 ein Drehmoment, das dabei maximal erreicht werden darf bzw. minimal erreicht werden muss.

Man erkennt, dass man durch die Vorgabe weniger Parameter unterschiedliche Schraubvorgänge mit oder ohne anfänglichem Einführen der Schraube in die Bohrung bzw. Nachdrehen programmieren kann, ohne dabei beispielsweise ein Umsetzen aufgrund eines eingeschränkten Werkzeugdrehwinklebereichs programmieren zu müssen.

Die vorstehend erläuterten Prozessmodule mit ihren Parametern p1, p2,... verstehen sich exemplarisch. Insbesondere kann ein Montagemodul zur Suche, zum Fügen von Stiften, zum Fügen von Zahnrädern oder zum Einschrauben wenige, mehr oder andere Parameter aufweisen.

Aus Vorstehendem wird deutlich, dass gemäß eines Aspekts der vorliegenden Erfindung zunächst Montage-, Handhabungs- und Hilfsoperationen von Robotern mit insbesondere hybrider Regelung analysiert und hierbei Gemeinsamkeiten und Unterschiede herausgearbeitet werden. Hieraus kann ein Basisbefehlssatz und eine Prozessmodulbibliothek abgeleitet werden, so dass Programme durch Kombinieren und/oder Parametrieren effizient auch von nicht spezialisierten Anwendern ohne Expertenwissen erstellt werden können. Das eigentliche Programmieren findet also vorab bei der Erstellung der Basisbefehle und Prozessmodule statt, der Endanwender muss diese nur noch kombinieren und/oder parametrieren.

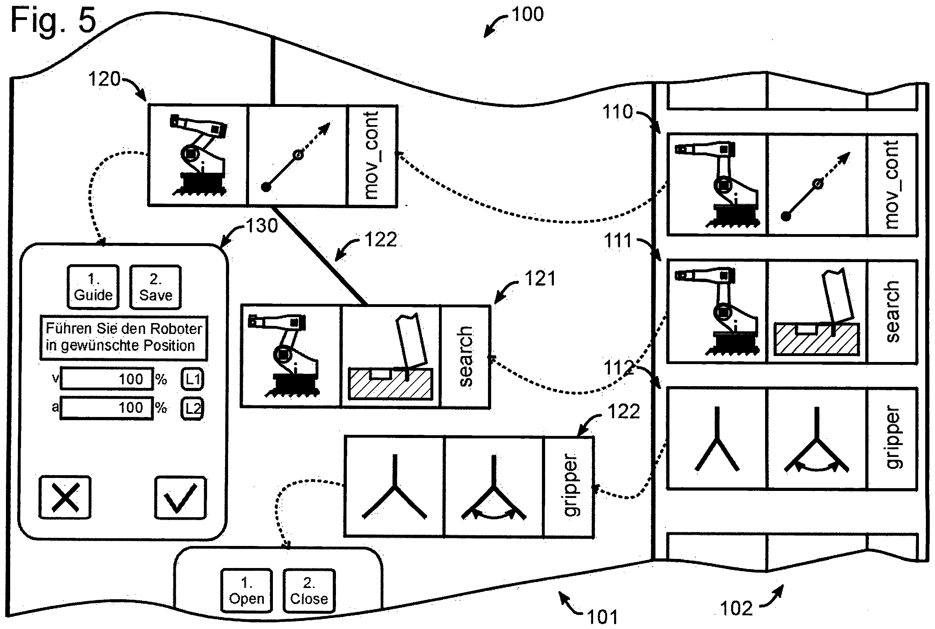

Fig. 5 zeigt einen Ausriss eines Touchscreens 100 einer graphischen Programmierumgebung nach einer Ausführung der vorliegenden Erfindung bei einer Programmierung des mit Bezug auf Fig. 1 erläuterten Manipulatorprozesses.

In einer als Abschnitt des Touchscreens 100 ausgebildeten Funktionsmodulbibliothek 102 sind zur Verfügung stehende graphische Funktionsmodule durch Icons repräsentiert. Der Anwender kann durch Berühren einzelne Funktionsmodule auswählen und in einen daneben als Abschnitt des Touchscreens ausgebildeten Arbeitsbereich 101 verschieben ("Drag&drop"), wie in Fig. 5 durch strichlierte Pfeile angedeutet. Ein aus der Funktionsmodulbibliothek 102 ausgewähltes und in den Arbeitsbereich 101 verschobenes Funktionsmodul wird dabei in der Funktionsmodulbibliothek 102 durch ein identisches Funktionsmodul ersetzt, so dass der Anwender das gleiche Funktionsmodul mehrfach auswählen und verwenden kann.

Zur besseren Übersichtlichkeit sind nur drei ausgewählte Funktionsmodule 120, 121, 122 bzw. deren Grundmuster 110, 111, 112 in der Funktionsmodulbibliothek 102 dargestellt.

Das eine Funktionsmodul 120 bzw. 110 bildet das mit Bezug auf Fig. 1 erläuterte Prozessmodul ab, das ein lagegeregeltes Anfahren einer Pose mit kontaktinduziertem Umschalten in eine Nachgiebigkeitsregelung implementiert. Dabei umfasst das Icon im linken Teil eine Repräsentation der ausgewählten Kinematik, hier eines sechsachsigen Knickarmroboters, im mittleren Bereich eine Repräsentation des durch das Funktionsmodul abgebildeten Prozessmoduls bzw. der durch das Funktionsmodul abgebildeten Aktion, hier dem gestrichelt angedeuteten Überfahren einer geteachten Pose, die durch einen leeren Kreis angedeutet ist, sowie im rechten Bereich eine erläuternde Information, hier dem Namen des Prozessmoduls.

Das andere Funktionsmodul 121 bzw. 111 bildet das mit Bezug auf Fig. 1 erläuterte Prozessmodul "search" ab, das ein Absuchen implementiert. In analoger Weise ist die Kinematik, die Aktion und eine Information durch das Icon repräsentiert.

Indem ein Anwender das Icon 111, wie durch den gestrichelten Pfeil angedeutet, mittels Drag&drop aus der Funktionsmodulbibliothek 102 in den Arbeitsbereich 101 herüber- und unterhalb des dort bereits positionierten Funktionsmoduls 120 in dessen Nähe zieht, wird das solcherart ausgewählte Funktionsmodul 121 automatisch derart mit dem Funktionsmodul 120 verknüpft, dass die Suche des Prozessmoduls "search" beginnt, sobald beim Anfahren kontaktinduziert in die Nachgiebigkeitsregelung umgeschaltet wurde. Diese Verknüpfung wird durch eine Verbindungslinie 123 symbolisiert, die durch Berühren verändert, beispielsweise zu einem anderen Funktionsmodul gezogen werden kann (nicht dargestellt).

Durch Antippen eines im Arbeitsbereich 101 positionierten Funktionsmoduls, in Fig. 5 etwa des Icons 120, kann dieses, wie durch einen strichlierten Pfeil angedeutet, derart aktiviert werden, dass sich ein Hilfs- bzw. Eingabefenster 130 öffnet.

Dieses Eingabefenster 130 umfasst zwei graphische, durch den Touchscreen 100 realisierte Steuereingabetasten "1. Guide" und "2. Save", einen erläuternden Hilfetext, sowie Eingabefelder für zwei Parameter, im Beispiel die Geschwindigkeit v und Beschleunigung a in Prozent eines vorgegebenen Maximalwertes, mit der bis zum Kontakt die geteachte Pose an- bzw. überfahren werden soll. Daneben sind noch eine Steuereingabe- oder "UNDO"-Taste "x" zur Deaktivierung des Eingabefensters 130 unter Verwerfung der Eingaben und Beibehaltung der bisherigen Parameterwerte und eine Steuereingabetaste "√" zur Eingabebestätigung vorgesehen.

Hat der Anwender durch Antippen des Funktionsmoduls 120 das Eingabefenster 130 geöffnet, kann er durch Antippen der Steuereingabetaste "1. Guide" den zu programmierenden Roboter in einen Führungsmodus schalten, in dem er den kraftgeregelten Roboter manuell in die zu überfahrende Pose führen kann, beispielsweise in eine Pose kurz vor oder in Kontakt mit einem zu bearbeitenden Werkstück. Dies wird durch den Hilfetext erläutert.

Hat der Anwender den Roboter manuell in die zu überfahrende Pose geführt, kann er durch Antippen der Steuereingabetaste"2. Save" diese Pose als zu überfahrende Pose speichern und so das Prozessmodul "mov_cont" auf einfache, graphische Weise ohne Verwendung einer Hochsprache parametrieren. Entsprechend des Steuerbefehls "touch up" wird auch diese Abfrage und Speicherung als Steuern des Roboters durch das Funktionsmodul bezeichnet.

Auf ähnliche Weise können in einem dem Funktionsmodul 121 zugeordneten Eingabefenster die vorstehend erläuterten Parameter p1 - p10 des Prozessmoduls "search(p1, p2, p3, p4, p5, p6, p7, p8, p9, p10)" eingegeben werden, wobei vorzugsweise Defaultwerte angezeigt und vom Anwender durch Touchscreenbetätigung veränderbar sind.

In einer nicht dargestellten Abwandlung kann beispielsweise mittels eines Funktionsmoduls eine CAD-Ansicht eines Werkstückes aufgerufen, in dieser eine Position, beispielsweise per Maus, ausgewählt, und als Position zum Beispiel für eine Startpose einer Suche, übernommen werden, so dass wiederum ein Prozessmodul "search" teilweise durch das Funktionsmodul parametriert wird.

Man erkennt, dass der Roboter während seiner Programmierung online mittels der Funktionsmodule 120, 121 der graphischen Programmierumgebung steuerbar ist, beispielsweise in einen Führungsmodus umschaltbar bzw. seine Pose abspeicherbar.

In gleicher Weise kann beispielsweise durch ein Funktionsmodul "gripper" ein Robotergreifer geöffnet bzw. geschlossen werden, indem ein entsprechendes Icon 112 aus der Funktionsmodulbibliothek 102 ausgewählt, in den Arbeitsbereich 101 verschoben (Fig. 5: "122") und dort durch Antippen aktiviert wird, wobei Steuereingabetasten "1. Open", "2. Close" dann je nach Werkzeugzustand ein Öffnen bzw. Schließen ermöglichen, die in einem in Fig. 5 teilweise angedeuteten Eingabefenster in analoger Weise wie vorstehend mit Bezug auf das Fenster 130 beschrieben betätigt werden können.

Hierzu muss das Funktionsmodul 122 nicht notwendigerweise mit anderen Funktionsmodulen verknüpft werden. Will beispielsweise der Anwender während der Programmierung den Greifer des Roboters öffnen, um seine maximale Spannweite zu testen, kann er einfach ein solches Funktionsmodul "Greifer" in den Arbeitsbereich 101 ziehen, dort durch Antippen das Eingabefenster öffnen und durch Betätigen der Steuereingabetaste "1. Open" den Greifer direkt öffnen, i.e. den Roboter steuern. Sobald er das Funktionsmodul 122 weder zum Steuern noch zum Programmieren des Roboters benötigt, kann er es wieder löschen. Auch hier wird deutlich, dass das Funktionsmodul 122 bzw. der durch dieses implementierte Teilprozess "Greifer öffnen/schließen" direkt während des Programmierens ohne vorherige Kompilierung des Gesamtprogramms ausführbar ist.

Man erkennt durch Vergleich der Icons 120-122 einerseits und 110-113 andererseits, dass die Repräsentation nach erfolgter Parametrierung automatisch geändert wird und jeweils die durch das Funktionsmodul bewirkte Endpose des Manipulators bzw. Greifers anzeigt. Auf diese Weise wird auf intuitive Weise durch die Abfolge der Icons 120, 121 der programmierte Manipulatorprozess nachgebildet und erkennbar.

Weiter ist in Fig. 5 rechts neben den Eingabefeldern für die Parameter v und a jeweils ein graphisches Steuerfeld "L1" bzw. "L2" vorgesehen. Durch Anwählen dieses Feldes kann ein höherrangiger Anwender, beispielsweise ein Programmierer des Herstellers, einzelne Elemente des Funktionsmoduls, hier die wählbaren Parameter v und a, für niederrangigere Anwender, etwa Kunden, freigeben oder sperren. Beispielsweise kann der höherrangige Anwender mit dem Rang "2" durch mehrfaches Antippen des Steuerfeldes "L1" eine Veränderung der Anfahrgeschwindigkeit auch durch weniger geschulte Anwender zulassen, während eine Veränderung der dabei auftretenden Beschleunigungen nur durch gleichrangige Anwender erfolgen darf. In analoger Weise können beispielsweise einzelne der Parameter p1-p10 des Prozessmoduls "search" für niederrangigere Anwender gesperrt und/oder ausgeblendet werden.

Man erkennt, dass hier ohne Beherrschung einer Hochsprache wie KRL auch komplexe Manipulatorporzesse wie der mit Bezug auf Fig. 1 näher erläuterte in intuitiver Weise programmiert werden können, wobei zu programmierende Roboter dabei durch die Funktionsmodule gesteuert, beispielsweise in einen Führungsmodus umgeschaltet werden können.

In den Ausführungsbeispielen wurde die Erfindung am Programmieren eines durch einen Roboter ausgeführten Manipulator erläutert. Wie erwähnt, kann ein erfindungsgemäß nach dem Prozessmodulbibliotheks- und/oder Programmierumgebungsaspekt programmierter Manipulatorprozess auch mehrere, insbesondere interagierende, Manipulatoren und/oder Zusatzachsen umfassen, die beispielsweise durch Transport- und/oder Spannvorrichtungen wie Dreh- und/oder Kipptische oder dergleichen realisiert sein können.

### Bezugszeichenliste

- 1: Stift zum Fügen/zur Suche
- 1': zu fügendes Zahnrad
- 1": einzuschraubende Schraube
- 2: Werkstück
- 2.1: Aussparung
- 3: Greifer
- 10: Zahnrad
- 100: Touchscreen (graphische Programmierumgebung)
- 101: Arbeitsbereich
- 102: Funktionsmodulbibliothek
- 110: graphisches Funktionsmodul "mov_cont" in Funktionsmodulbibliothek
- 111: graphisches Funktionsmodul "search" in Funktionsmodulbibliothek
- 112: graphisches Funktionsmodul "gripper" in Funktionsmodulbibliothek
- 120: graphisches Funktionsmodul "mov_cont" in Arbeitsbereich
- 121: graphisches Funktionsmodul "search" in Arbeitsbereich
- 122: graphisches Funktionsmodul "gripper" in Arbeitsbereich
- 123: Verknüpfung
- 130: Hilfs- bzw. Eingabefenster
- F_{H}: Haltekraft während Umorientierung(en)
- F_{z}: Anpresskraft während Suche
- v_{z}: Suchrichtung
- R1,... R3': Rotation

## Patentansprüche

1. Prozessmodulbibliothek zur Programmierung eines Manipulatorprozesses, insbesondere eines Montageprozesses, mit einer Mehrzahl von parametrierbaren Prozessmodulen zur Durchführung je eines, insbesondere für verschiedene Manipulatorprozesse gemeinsamen, Teilprozesses, wobei die Prozessmodule jeweils eine Mehrzahl von Basisbefehlen eines gemeinsamen Basisbefehlssatzes zur Durchführung einer, insbesondere atomaren oder molekularen, Basisoperation umfassen, wobei ein Prozessmodul mit einem weiteren Prozessmodul und/oder einem Basisbefehl, insbesondere mathematisch, verknüpfbar ist, wobei ein Teilprozess ein Prozesserfolgsprüfen umfasst.

2. Prozessmodulbibliothek nach Anspruch 1, **dadurch gekennzeichnet, dass** wenigstens ein Parameter (p1, p2; p1, p3; p1; p3) eines Prozessmoduls einen Typus des durch dieses Prozessmodul durchgeführten Teilprozesses oder eine Kinematik eines Manipulators definiert.

3. Prozessmodulbibliothek nach einem der vorhergehenden Ansprüche, **dadurch gekennzeichnet, dass** ein Teilprozess eine Posensuche, ein Fügen mit einer oder mehreren formschlüssigen Fügeverbindungen, ein Schrauben, Greifen, Ausrichten und/oder Einmessen umfasst.

4. Prozessmodulbibliothek nach Anspruch 3, **dadurch gekennzeichnet, dass** durch ein Prozessmodul durchgeführte Fügeprozesse ein Fügen mit zur Fügerichtung rotationssymmetrischem Querschnitt und/oder ein Fügen unter Anfahren einer Ecke, insbesondere unter anschließender Umorientierung um eine oder zwei Achsen (R1, R2), umfasst.

5. Prozessmodulbibliothek nach einem der vorhergehenden Ansprüche, **dadurch gekennzeichnet, dass** eine Basisoperation wenigstens eine Regelung, insbesondere Nachgiebigkeits- und/oder Kraftregelung, Bewegung, Interruptroutine, Baseoperation, Tooloperation, Posenverwaltung, Prüfung einer Bedingung, insbesondere eines Abbruchkriteriums, und/oder Peripherieoperation umfasst.

6. Verfahren zur Programmierung eines Manipulatorprozesses, insbesondere eines Montageprozesses, mittels einer Prozessmodulbibliothek nach einem der vorhergehenden Ansprüche, mit dem Schritt:
Auswählen und Parametrieren wenigstens eines Prozessmoduls der Prozessmodulbibliothek.

7. Verfahren nach Anspruch 6, **gekennzeichnet durch** den Schritt:
Verknüpfen des ausgewählten Prozessmoduls mit wenigstens einem weiteren Prozessmodul und/oder einem Basisbefehl.

8. Verfahren zur Erstellung einer Prozessmodulbibliothek nach einem der vorhergehenden Ansprüche 1 bis 5, mit den Schritten:
Identifikation von, insbesondere für verschiedene Manipulatorprozesse gemeinsamen, Teilprozessen;
Identifikation und Erstellung eines gemeinsamen Basisbefehlssatzes;
Erstellen von Prozessmodulen zur Durchführung identifizierter Teilprozesse durch Parametrisieren und/oder Verknüpfen von Basisbefehlen des gemeinsamen Basisbefehlssatzes;
Bereitstellen der erstellten Prozessmodule in der Prozessmodulbibliothek.

9. Graphische Programmierumgebung (100) zur Programmierung eines Manipulatorprozesses, insbesondere eines Montageprozesses, mit einer Mehrzahl von graphischen Funktionsmodulen (110, 111, 112, 120, 121, 122) zur Durchführung je eines Teilprozesses, wobei wenigstens ein Teilprozess und/oder wenigstens ein Manipulator während der Programmierung, insbesondere online, mittels eines dieser Funktionsmodule steuerbar ist, **dadurch gekennzeichnet, dass** ein Funktionsmodul ein Prozessmodul oder einen Basisbefehl einer Prozessmodulbibliothek nach einem der Ansprüche 1 bis 5 abbildet.

10. Programmierumgebung nach Anspruch 9, **dadurch gekennzeichnet, dass** ein durch ein Funktionsmodul implementierter Teilprozess während der Programmierung ausführbar ist.

11. Programmierumgebung nach einem der Ansprüche 9 bis 10, **dadurch gekennzeichnet, dass** ein Funktionsmodul durch Berühren einer Anzeigeoberfläche (100) handbar ist und/oder eine Repräsentation einer Kinematik, Aktion und/oder Information umfasst.

12. Programmierumgebung nach Anspruch 11, **dadurch gekennzeichnet, dass** das Prozessmodul wenigstens teilweise durch ein Funktionsmodul parametrierbar ist.

13. Programmierumgebung nach einem der Ansprüche 9 bis 12, **dadurch gekennzeichnet, dass** Funktionsmodule in Abhängigkeit von ihrer Position automatisch verknüpfbar sind.

14. Programmierumgebung nach einem der Ansprüche 9 bis 13, **dadurch gekennzeichnet, dass** sich eine graphische Repräsentation eines Funktionsmoduls in Abhängigkeit von einer Parametrisierung des ausgewählten Funktionsmoduls ändert.

15. Programmierumgebung nach einem der Ansprüche 9 bis 14, **dadurch gekennzeichnet, dass** ein Element eines Funktionsmoduls in Abhängigkeit von einem Anwenderstatus ("L1", "L2") veränderbar ist und/oder angezeigt wird.

16. Verfahren zur Programmierung eines Manipulatorprozesses, insbesondere eines Montageprozesses, mittels einer graphischen Programmierumgebung nach einem der vorhergehenden Ansprüche 9 bis 15, mit den Schritten:
Programmieren des Manipulatorprozesses durch Auswahl, Verknüpfung und/oder Parametrierung von graphischen Funktionsmodulen; und
Steuern wenigstens eines Manipulators und/oder Teilprozesses während der Programmierung, insbesondere online, mittels eines Funktionsmoduls der Programmierumgebung.

17. Computerprogrammprodukt mit Programmcode, der auf einem maschinenlesbaren Träger gespeichert ist und eine Prozessmodulbibliothek nach einem der vorhergehenden Ansprüche 1 bis 5 umfasst und/oder ein Verfahren nach einem der Ansprüche 6 bis 8 und/oder 16 ausführt, wenn er in einem Computer, insbesondere einer graphischen Programmierumgebung nach einem der vorhergehenden Ansprüche 9 bis 15, ausgeführt wird.

## Claims

1. A process module library for programming a manipulator process, in particular an assembly process, comprising a plurality of parameterisable process modules, each for carrying out a respective sub-process, in particular for carrying out a respective sub-process which is common to different manipulator processes, wherein the process modules each comprise a plurality of basic commands of a common set of basic commands for carrying out a basic operation, in particular an atomic or molecular basic operation, wherein a process module can be linked to a further process module and / or a basic command, in particular mathematically, wherein a sub-process comprises a process success test.

2. The process module library according to claim 1, **characterised in that** at least one parameter (p1, p2; p1, p3; p1; p3) of a process module defines a type of the sub-process which is carried out by this process module, or a kinematics of a manipulator.

3. The process module library according to any one of the preceding claims, **characterised in that** a sub-process comprises a pose search, a joining operation with one or more form-fitting joints, a screwing operation, a gripping operation, an aligning operation and / or a measuring operation.

4. The process module library according to claim 3, **characterised in that** joining processes carried out by a process module comprise a joining operation with a cross-section which is rotationally symmetrical with respect to the joining direction and / or a joining operation that involves approaching a corner, in particular with subsequent reorientation about one or two axes (R1, R2).

5. The process module library according to any one of the preceding claims, **characterised in that** a basic operation comprises at least a control with feedback, in particular compliance control and / or force control, a movement, an interrupt routine, a base operation, a tool operation, pose management, checking of a condition, in particular of an abort criterion, and / or a peripheral operation.

6. A method of programming a manipulator process, in particular an assembly process, by means of a process module library according to any one of the preceding claims, comprising the step of:
selecting and parameterising at least one process module of the process module library.

7. The method according to claim 6, **characterised by** the step of:
linking the selected process module with at least one further process module and / or with a basic command.

8. A method of creating a process module library according to any one of the preceding claims 1 to 5, comprising the steps of:
identification of sub-processes, in particular identification of sub-processes which are common to different manipulator processes;
identification and creation of a common set of basic commands;
creation of process modules for carrying out identified sub-processes by parameterising and / or linking basic commands of the common set of basic commands;
provision of the created process modules in the process module library.

9. A graphical programming environment (100) for programming a manipulator process, in particular an assembly process, comprising a plurality of graphical function modules (110, 111, 112, 120, 121, 122), each for carrying out a respective sub-process, wherein at least one sub-process and / or at least one manipulator can be controlled during programming, in particular online, by means of one of these function modules, **characterised in that** a function module maps a process module or a basic command of a process module library according to any one of the claims 1 to 5.

10. The programming environment according to claim 9, **characterised in that** a sub-process implemented by a function module can be executed during programming.

11. The programming environment according to any one of the claims 9 to 10, **characterised in that** a function module can be handled by touching a display surface (100) and / or comprises a representation of a kinematics, an action and / or information.

12. The programming environment according to claim 11, **characterised in that** the process module can be parameterised at least partially by a function module.

13. The programming environment according to any one of the claims 9 to 12, **characterised in that** function modules can be linked automatically in dependence upon their position.

14. The programming environment according to any one of the claims 9 to 13, **characterised in that** a graphical representation of a function module changes in dependence upon a parameterisation of the selected function module.

15. The programming environment according to any one of the claims 9 to 14, **characterised in that** an element of a function module can be changed and / or displayed in dependence upon a user status ("L1", "L2").

16. A method of programming a manipulator process, in particular an assembly process, by means of a graphical programming environment according to any one of the preceding claims 9 to 15, comprising the steps of:
programming the manipulator process by selecting, linking and / or parameterising graphical function modules; and
controlling at least one manipulator and / or a partial process during programming, in particular online, by means of a function module of the programming environment.

17. A computer program product with program code, which is stored on a machine-readable carrier and which comprises a process module library according to any one of the preceding claims 1 to 5 and / or which executes a method according to any one of the claims 6 to 8 and / or 16 when it is executed in a computer, in particular in a graphical programming environment according to any one of the preceding claims 9 to 15.

## Revendications

1. Bibliothèque de modules de processus pour la programmation d'un processus de manipulateur, en particulier d'un processus de montage, avec une pluralité de modules de processus paramétrables pour la réalisation de respectivement un processus partiel, commun en particulier pour différents processus de manipulateur, dans laquelle les modules de processus comprennent respectivement une pluralité d'ordres de base d'un jeu d'ordres de base commun pour la réalisation d'une opération de base, en particulier atomique ou moléculaire, dans laquelle un module de processus peut être relié à un autre module de processus et/ou à un ordre de base, en particulier mathématiquement, dans laquelle un processus partiel comprend une vérification de succès de processus.

2. Bibliothèque de modules de processus selon la revendication 1, **caractérisée en ce qu'**au moins un paramètre (p1, p2 ; p1, p3 ; p1 ; p3) d'un module de processus définit un type du processus partiel réalisé par ce module de processus ou une cinématique d'un manipulateur.

3. Bibliothèque de modules de processus selon l'une quelconque des revendications précédentes, **caractérisée en ce qu'**un processus partiel comprend une recherche de pose, une jonction avec une ou plusieurs liaisons de jonction à complémentarité de forme, un vissage, une préhension, une orientation et/ou une mesure.

4. Bibliothèque de modules de processus selon la revendication 3, **caractérisée en ce qu'**une jonction avec section transversale symétrique en rotation par rapport à la direction de jonction et/ou une jonction par approche d'un coin, en particulier par réorientation subséquente autour d'un ou deux axes (R1, R2) par un module de processus comprend des processus de jonction réalisés par un module de processus.

5. Bibliothèque de modules de processus selon l'une quelconque des revendications précédentes, **caractérisée en ce qu'**une opération de base comprend au moins une régulation, en particulier régulation de flexibilité et/ou de force, un mouvement, une routine d'interruption, une opération de base, une opération d'outil, une gestion de pose, une vérification d'une condition, en particulier d'un critère d'interruption, et/ou une opération de périphérie.

6. Procédé de programmation d'un processus de manipulateur, en particulier d'un processus de montage, au moyen d'une bibliothèque de modules de processus selon l'une quelconque des revendications précédentes, avec l'étape de :
sélection et paramétrage d'au moins un module de processus de la bibliothèque de modules de processus.

7. Procédé selon la revendication 6, **caractérisé par** l'étape de :
liaison du module de processus sélectionné à au moins un autre module de processus et/ou un ordre de base.

8. Procédé d'établissement d'une bibliothèque de modules de processus selon l'une quelconque des revendications précédentes 1 à 5, avec les étapes de :
identification de processus partiels, communs en particulier pour différents processus de manipulateur ;
identification et établissement d'un jeu d'ordres de base commun :
établissement de modules de processus pour la réalisation de processus partiels identifiés par paramétrage et/ou liaison d'ordres de base du jeu d'ordres de base commun ;
mise à disposition des modules de processus établis dans la bibliothèque de modules de processus.

9. Environnement de programmation graphique (100) pour la programmation d'un processus de manipulateur, en particulier d'un processus de montage, avec une pluralité de modules fonctionnels graphiques (110, 111, 112, 120, 121, 122) pour la réalisation de respectivement un processus partiel, dans lequel au moins un processus partiel et/ou au moins un manipulateur peut être commandé pendant la programmation, en particulier en ligne, au moyen d'un de ces modules fonctionnels, **caractérisé en ce qu'**un module fonctionnel représente un module de processus ou un ordre de base d'une bibliothèque de modules de processus selon l'une quelconque des revendications précédentes 1 à 5.

10. Environnement de programmation selon la revendication 9, **caractérisé en ce qu'**un processus partiel implémenté par un module fonctionnel peut être exécuté pendant la programmation.

11. Environnement de programmation selon l'une quelconque des revendications 9 à 10, **caractérisé en ce qu'**un module fonctionnel est maniable par contact d'une surface d'affichage (100) et/ou comprend une représentation d'une cinématique, d'une action et/ou d'une information.

12. Environnement de programmation selon la revendication 11, **caractérisé en ce que** le module de processus est paramétrable au moins en partie par un module fonctionnel.

13. Environnement de programmation selon l'une quelconque des revendications 9 à 12, **caractérisé en ce que** les modules fonctionnels peuvent être reliés automatiquement en fonction de leur position.

14. Environnement de programmation selon l'une quelconque des revendications 9 à 13, **caractérisé en ce qu'**une représentation graphique d'un module fonctionnel change en fonction d'un paramétrage du module fonctionnel sélectionné.

15. Environnement de programmation selon l'une quelconque des revendications 9 à 14, **caractérisé en ce qu'**un élément d'un module fonctionnel est modifiable et/ou affiché en fonction d'un état d'utilisateur (« L1 », « L2 »).

16. Procédé de programmation d'un processus de manipulateur, en particulier d'un processus de montage, au moyen d'un environnement de programmation graphique selon l'une quelconque des revendications 9 à 15, avec les étapes de :
programmation du processus de manipulateur par sélection, liaison et/ou paramétrage de modules fonctionnels graphiques ; et
commande d'au moins un manipulateur et/ou processus partiel pendant la programmation, en particulier en ligne, au moyen d'un module fonctionnel de l'environnement de programmation.

17. Produit de programme informatique avec code de programme, qui est enregistré sur un support lisible par machine et comprend une bibliothèque de modules de processus selon l'une quelconque des revendications précédentes 1 à 5 et/ou un procédé selon l'une quelconque des revendications 6 à 8 et/ou 16, lorsqu'il est exécuté dans un ordinateur, en particulier un environnement de programmation graphique selon l'une quelconque des revendications 9 à 15.
